Europäisches Patentamt

European Patent Office

Office européen des brevets

(19)

(11) Publication number: **0 094 189**
A1

# EUROPEAN PATENT APPLICATION

(12)

(21) Application number: **83302474.8**

(22) Date of filing: **03.05.83**

(51) Int. Cl.³: **H 01 M 6/12, H 01 M 6/16**

(30) Priority: **03.05.82 US 374168**

(43) Date of publication of application: **16.11.83**
**Bulletin 83/46**

(84) Designated Contracting States: **DE FR GB**

(71) Applicant: **RAYOVAC Corporation, 101 East Washington Avenue, Madison Wisconsin 53703 (US)**

(72) Inventor: **Aker, Wesley Edward, Bull Mill Road, Chester, NY 10918 (US)**
Inventor: **Margalit, Nehemiah, Borth Road, Chester, NY 10918 (US)**

(74) Representative: **Greenstreet, Cyril Henry et al, Thames House (Fifth floor) Millbank, London SW1P 4QF (GB)**

(54) **Galvanic cell.**

(57) A design of galvanic cell particularly suitable for non-aqueous (e.g. Li/organic electrolyte) systems comprises a cathode 24, a conductive case 12 in electrical registry with the cathode, an electrolyte, an anode 18, a conductive cover 14 in electrical registry with the anode, a separator 22 between the anode and the cathode, a first expansion space 20 between the anode and the cathode, and an insulating sealing member 16 disposed between the case and the cover. The cathode 24 is in the form of a wafer, a conductive spacer 26 is disposed between the cathode and the case so as to form a second expansion space 30 between the cathode and the case, and the electrolyte is disposed within the first and second expansion spaces. A reducing pellet may be disposed between the spacer 26 and the case 12.

EP 0 094 189 A1

ACTORUM AG

- 1 -

Galvanic cell

This invention relates to galvanic cells, and in particular to so-called button cells.

In the design of any battery system, the allocation of space and the selection of the various cell components are obviously of prime importance. In order to extract the greatest energy density from a given cell configuration, the anode and the cathode must be in compacted form so as to take the greatest advantage of the limited space for the product of the electrode reactions. Traditionally, the expansion space has been located between the anode and the cathode, where the electrolyte and the separator are also located.

A trend in battery design has been to increase the weight of the electrode in order to increase its capacity. This is accomplished by compacting the electrode to fit it into the limited space provided. Unfortunately, it has been found that the efficiency and capacity of the cell may thereby be reduced because the expansion space provided is then insufficient. The reaction products tend to decrease the capacity of the cell by blocking the pores and reaction sites of the electrode. The problem is exacerbated by the fact that the product compacts into the electrode pores and prevents the entry of enough electrolyte to sustain the desired reactions.

One method for alleviating this problem is to increase the porosity of the electrode. Although some improvement may be obtained this way, the reduction in conductivity and the weakening of the structure of the electrode limit progress in this direction, while the remaining problem of providing adequate expansion space is still not resolved.

This has led to a compromise in that, at the reaction product forming electrode, important parameters such as product expansion space, electrode density, active surface area, porosity, conductivity and wetability were traded off for one another.

Shortage of reaction space is especially acute in non-aqueous battery systems. For example, in lithium systems the reaction product forms at the cathode and swells it outwardly in all directions. Moreover, lithium discharge products, such as lithium sulphide or lithium oxide, are poor ionic and electronic conductors, usually forming at the interface between the electrolyte and the cathode, leading to a reduction in ionic and electronic flow and, as a consequence, in the efficiency of the battery.

Besides posing a problem within the cell, cathode expansion may also damage the device in which the cell is situated. Thus axial expansion of the cathode results in the bulging of the cell container. For example, if a button cell is placed within a delicate electronic assembly, as the cell discharges, the bulging case may become embedded within the cell container, the removal of which may necessitate costly repair. Obviously, as the electronic industry continues in its ingenious march towards miniaturization, tolerances between cell holders and the cells themselves will become increasing critical. Consequently, there is a need for cells that do not expand appreciably.

A further problem in battery design is that certain cathode formulations (e.g. FeS, CuS, $Bi_2S_3$ and CdO) contain traces of high voltage impurities (e.g. elemental sulphur and hydroxides) that often lead to undesirably high initial open circuit voltages. In order to stabilise (that is, reduce) the voltage in new cells, battery manufacturers usually resort to a method called "burning in" in which the cell is purposely discharged a predetermined amount before shipment. Other techniques for stabilising the cells include blending a reducing agent into the cathode mix or physically registering a reducing pellet against the cathode. A drawback of the former technique is that an additional blending step is required, whereas with the latter technique effective reduction takes place only in the vicinity of the pellet/cathode interface. It is desirable to have the localised reaction occur over a broad cathode area.

The present invention provides an improved cell configuration that provides more product expansion space initially in the cell without appreciable attendant disadvantages. This is achieved by providing a second expansion space between the product-producing electrode and the cell casing by locating a current collecting spacer under the cathode. The electrode can thus expand in two axial directions while the active surface area of the electrode is effectively doubled, thus increasing its chemical efficiency, since the electrolyte can come freely into contact with a second, usually dry, cathode surface that is normally registered against the inside of the case. Moreover the second expansion space provides a site for the placement of a reducing pellet in the vicinity of the cathode yet spaced away therefrom to ensure electronic contact and electrolyte contact between the reducing agent and the cathode, thus generating a secondary electrochemical reduction over as large a portion of the electrode surface as possible. This arrangement allows for a better rate performance at the initiation of cell discharge without the need for burning or blending.

According to the invention, in a galvanic cell that includes a cathode, a conductive case in electrical registry with the cathode, an electrolyte, an anode, a conductive cover in electrical registry with the anode, a separator between the anode and the cathode, a first expansion space between the anode and the cathode, and an insulating sealing member disposed between the case and the cover, the cathode is in the form of a wafer, a conductive spacer is disposed between the cathode and the case so as to form a second expansion space between the cathode and the case, and the electrolyte is disposed within the first and second expansion spaces.

The invention will now be described in more detail with reference to the accompanying drawings, in which:

Figure 1 is a cross sectional elevation of a button cell employing an embodiment of the invention; and

Figure 2 is a cross sectional section of an alternate embodiment of the invention.

It should be understood that although the following discussion primarily refers to non-aqueous lithium/solid cathode systems, the invention disclosed herein may be utilised with other cell systems (aqueous and non-aqueous) in which an electrode may be prone to expansion.

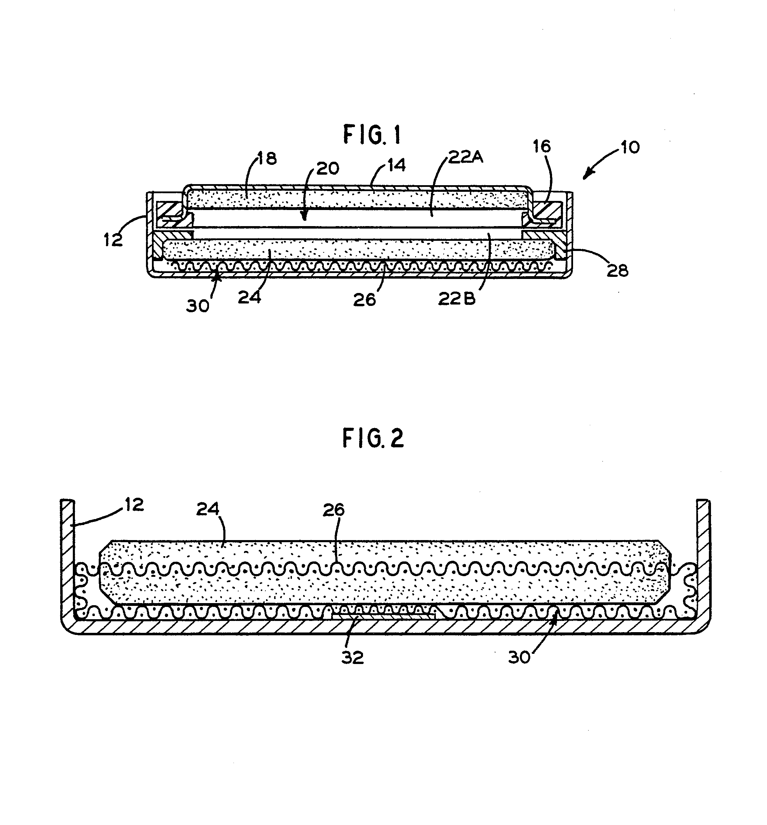

Referring first to Figure 1, a button cell 10 that consists of a conductive case 12, a conductive cover 14, and an insulating sealant or gasket 16 disposed between the case 12 and the cover 14, is shown just prior to closure by crimping the edge of the case 12 against the gasket 16.

A consumable anode 18, such as lithium, sodium, potassium, calcium, magnesium and alloys thereof, is in direct electrical contact with the conductive cover 14. A first expansion space 20, located directly below the anode 18, may be provided by one or two compressible porous separators 22A and 22B. These separators must be chemically compatible with the other cell components and have sufficient porosity to permit the electrolyte to permeate through and contact both the anode 18 and the cathode 24, thus establishing an ion transfer path between the negative and positive electrodes. Moreover, the separators 22A and 22B must exhibit compressible characteristics in order for the separator to accommodate upward expansion of the cathode 24. Accordingly, the separator may be made from any suitable material such as polypropylene, polyethylene, glass and the like.

The cathode 24, preferably a solid wafer, may be made from any material suitable for non-aqueous systems such as $CF_x$, metal oxides such as $V_2O_5$, $WO_3$, $MoO_3$, lead oxides (such as $Pb_3O_4$, PbO), cobalt oxides, $MnO_2$, copper oxides, metal sulphides (such as CuS, $CoS_2$, FeS, $FeS_2$) metal chromates (such as $Ag_2CrO_4$) metal phosphates (such as $Ag_3PO_4$) and metal sulphates (such as $CuSO_4$).

This list of cathode materials is not meant to be exhaustive: rather they are simply cited as examples of various cathodic materials suitable for use with the invention disclosed.

A conductive spacer or current collector 26 is arranged in intimate electrical registry with the cathode 24 and the case 12. A load-bearing ring 28 may be disposed between the cathode 24 and the gasket 16 so as to provide support to the internal structure of the cell 10 during the crimping and closing operations.

By locating the current collector 26 below the cathode 24, a second expansion space 30 is created between the cathode 24 and the case 12. A suitable electrolyte selected for the particular cell chemistry involved is located both in the first expansion space 20 and in the second expansion space 30, as well as within the cathode 24 and the separator or separators 22A and 22B. An extensive list of suitable electrolytes is disclosed in U.S. Patent No. 4 129 686.

Figure 2 shows the lower part only of an alternative embodiment of the invention. In this embodiment, the cathode wafer 24 has the current collector 26 embedded within itself and folded thereunder to form the second expansion space 30 between the cathode 24 and the case 12.

As mentioned above, the conductive spacer 26 also serves as a current collector. Although shown as a screen, it may be of any design (such as a serrated annular ring, net, grid, etc.) that meets the following criteria:

1. It must be of such a configuration as to provide sufficient space for the expansion of the reaction product and for penetration of the electrolyte to wet the reaction surfaces.

2. Ohmic contact must be maintained between the electrode and the casing.

Embedding the spacer 26 within the electrode 24 during the wafer forming process, as shown in Figure 2, is advantageous from the points of view of conductivity, current collection and distribution, and ease of assembly.

In either embodiment, a reducing pellet 32 may be disposed between the grid 26 and the case 12. Figure 2 shows how the pellet 32 may be located so as not to contact the cathode 24 but still be in intimate electrical registry with the grid 26, the case 12 and the electrolyte disposed within the second expansion space 30. For ease of construction, the reducing pellet 32 may be made from the same material as the anode 18. In use, the pellet 32 will discharge, forming a localised, shorted cell along a substantial portion of the grid 26. Thus, for example, in an Li/FeS cell, the time required for the cathode to open up and attain its proper operating voltage is shortened considerably. By spacing the pellet 32 as far away as possible from the grid 26, a broad-based internal localised cell reaction is generated.

Moreover, when the resultant reaction product is a conductor ($FeS \rightarrow Fe$, $Ag_2CrO_4 \rightarrow Ag$, $Bi_2S_3 \rightarrow Bi$), the product forms an effective current collector on the reduced surface, thus further improving cathode conductivity.

The novel cell configuration of the invention offers further benefits in keeping the reaction surfaces within the cell wet; and countering the possible effects of gas bubbles in the expansion space.

By way of example, miniature button cells (RW-44 and RW-30 cell sizes) with a lithium/iron sulphide organic electrolyte system were constructed as shown in Figure 1, and without a nickel screen spacer 26.

The results in Table I for RW-30 cells show that with the spacer 26, the cells discharged at a reasonable capacity and service time, whereas without the spacer the cells failed to sustain the imposed load.

### TABLE I

| Parameter | With Spacer | Without Spacer |
|---|---|---|
| Average service time (hr) | 61.6 | 0.01 |
| Average cell capacity (mAH) | 24.2 | 0.03 |
| Number of cells | 8 | 3 |

Electrolyte: 5OPC/5ODME/1.2M $LiAsFe_6$.

(PC = propylene carbonate,  DME = dimethoxyethane)

0094189

## Claims

1.      A galvanic cell comprising a cathode 24, a conductive case 12 in electrical registry with the cathode, an electrolyte, an anode 18, a conductive cover 14 in electrical registry with the anode, a separator 22 between the anode and the cathode, a first expansion space 20 between the anode and the cathode, and an insulating sealing member 16 disposed between the case and the cover, characterised in that the cathode 24 is in the form of a wafer, a conductive spacer 26 is disposed between the cathode and the case so as to form a second expansion space 30 between the cathode and the case, and the electrolyte is disposed within the first and second expansion spaces.

2.      A cell according to claim 1, characterised in that the spacer 26 is embedded within the cathode 24 and folded under the cathode and is in initimate electrical contact with the cathode and the case.

3.      A cell according to claim 1 or claim 2 characterised in that a reducing pellet 32 is disposed within the second expansion space  30.

4.      A cell according to claim 3, characterised in that the pellet 32 is registered between the case 12 and the spacer 26.

5.      A cell according to any preceding claim characterised in that the spacer 26 is in the form of a grid.

6.      A cell according to any preceding claim, characterised in that a load-bearing ring 28 is disposed between the sealing member 16  and the cathode 24.

7.      A cell according to any preceding claim, characterised in that the cell is of the lithium/organic electrolyte type.

reduced surface, thus further improving cathode conductivity.

The novel cell configuration of the invention offers further benefits in keeping the reaction surfaces within the cell wet; and countering the possible effects of gas bubbles in the expansion space.

By way of example, miniature button cells (RW-44 and RW-30 cell sizes) with a lithium/iron sulphide organic electrolyte system were constructed as shown in Figure 1, and without a nickel screen spacer 26.

The results in Table I for RW-30 cells show that with the spacer 26, the cells discharged at a reasonable capacity and service time, whereas without the spacer the cells failed to sustain the imposed load.

TABLE I

| Parameter | With Spacer | Without Spacer |
|---|---|---|
| Average service time (hr) | 61.6 | 0.01 |
| Average cell capacity (mAH) | 24.2 | 0.03 |
| Number of cells | 8 | 3 |

Electrolyte: 50PC/50DME/1.2M $LiAsF_6$.
(PC = propylene carbonate, DME = dimethoxyethane)

## FIG. 1

## FIG. 2

0094189

European Patent
Office

**EUROPEAN SEARCH REPORT**

Application number

EP 83 30 2474

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | FR-A-2 293 804 (MATSUSHITA)<br>* Page 2, lines 23-37; page 3, lines 8-40; page 4, lines 1-15; page 10, claims 1,3,4 *<br><br>--- | 1,6,7 | H 01 M 6/12<br>H 01 M 6/16 |
| X,Y | FR-A-2 378 363 (S.A.F.T.)<br>* Page 1, lines 32-40; page 2; page 3, lines 26-30 *<br><br>--- | 1 | |
| X,Y | US-A-3 920 478 (AKIYA KOZAWA)<br>* Column 6, lines 47-68; column 7, lines 1-32 *<br><br>--- | 1,3,5 | |
| Y | FR-A-2 460 043 (SANYO)<br>* Page 3, lines 12-37; page 4; page 5, lines 1-25 *<br><br>--- | 2,7 | |
| A | FR-A-2 430 670 (LECLANCHE)<br><br>--- | | **TECHNICAL FIELDS SEARCHED (Int. Cl. 3)**<br><br>H 01 M |
| A | US-A-3 525 647 (HOWARD J. STRAUSS)<br><br>----- | | |

The present search report has been drawn up for all claims

| Place of search<br>THE HAGUE | Date of completion of the search<br>24-08-1983 | Examiner<br>DE VOS L.A.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document